# FASCICULE DE BREVET EUROPEEN

(11) **EP 1 017 762 B1**
(45) Date de publication et mention de la délivrance du brevet: **10.04.2002**
(21) Numéro de dépôt: 98942798.4
(22) Date de dépôt: 31.08.1998
(51) Int. Cl.: C10G 11/18, B01J 8/00

(54) **DISPOSITIF DE SEPARATION ET DE STRIPAGE ET SON UTILISATION EN CRAQUAGE CATALYTIQUE EN LIT FLUIDISE**
EINRICHTUNG ZUM TRENNEN UND ABSCHEIDEN UND IHRE VERWENDUNG IN EINEM KATALYTISCHEN WIRBELBETTKRACKVERFAHREN
SEPARATING AND STRIPPING DEVICE AND ITS USE IN CATALYTIC CRACKING ON FLUIDISED BED

(30) Priorité: 01.09.1997 FR 9710929; 28.07.1998 FR 9809672
(43) Date de publication de la demande: 12.07.2000
(73) Titulaire: INSTITUT FRANCAIS DU PETROLE, 92852 Rueil-Malmaison Cedex (FR)
(72) Inventeur: GAUTHIER, Thierry, F-69530 Brignais (FR); LEROY, Patrick, F-69006 Lyon (FR); BAYLE, Jérôme, F-69007 Lyon (FR); MIURA, Taisei, F-75003 Paris (FR)
(74) Mandataire: Andréeff, François
(86) Numéro de dépôt international: FR9801866
(87) Numéro de publication internationale: WO9911739

(56) Documents cités:
- EP-A- 0 139 390
- EP-A- 0 332 277
- EP-A- 0 532 071
- US-A- 4 664 888

## Description

L'invention concerne un dispositif de séparation et de stripage et son utilisation dans un procédé de craquage catalytique d'hydrocarbures dans un réacteur ascendant et/ou descendant.
Les unités de craquage catalytique sont en général constituées d'une zone réactionnelle, dans laquelle le catalyseur est mis en contact avec une charge hydrocarbonée dans un réacteur généralement de forme tubulaire allongée, puis séparé des hydrocarbures au moins partiellement en un ou plusieurs étages de séparation, les hydrocarbures accompagnés d'une quantité aussi faible que possible de catalyseur sortant de la zone réactionnelle pour rejoindre la section de fractionnement des hydrocarbures. Le catalyseur issu des différents étages de séparation est mis en contact avec un gaz différent des hydrocarbures, tel que l'azote ou la vapeur par exemple, afin de favoriser la désorption d'hydrocarbures entraînés dans ses pores, cette phase étant communément appelée stripage (du terme *stripping* en anglais). Le catalyseur est ensuite évacué vers la zone de régénération où le coke formé pendant la réaction dans le réacteur tubulaire et les hydrocarbures qui n'ont pu être désorbés pendant la phase de stripage sont brûlés en milieu oxydant.

Afin d'obtenir de bonnes sélectivités en produits valorisables dans la zone réactionnelle de l'unité de craquage catalytique, il est nécessaire :
- d'évacuer rapidement les produits gazeux issus de la zone de contactage entre les hydrocarbures et le catalyseur après le premier étage de séparation pour éviter de dégrader thermiquement les produits intermédiaires des réactions de craquage qui possèdent en général les plus fortes valeurs ajoutées,
- de limiter l'entraînement d'hydrocarbures avec le catalyseur, et donc d'obtenir un bon stripage du catalyseur.

Il existe de nombreuses façons d'effectuer ces opérations de séparation et de désorption et la littérature est riche en dispositifs technologiques dérivés pour le craquage catalytique et plus ou moins performants pour effectuer ces différentes opérations. Et s'il est relativement simple d'effectuer une séparation rapide ou un bon stripage, il est difficile d'effectuer simultanément une séparation rapide et un bon stripage.

L'art antérieur est illustré par le brevet US- 4 664 888 qui décrit un dispositif de séparation des gaz de craquage et du catalyseur. Ces gaz sont séparés et rejetés dans la phase diluée du réacteur. Le réacteur présentant un grand volume, le temps de séjour des gaz correspondant au temps passé par ces gaz entre la sortie du réacteur de craquage et l'entrée des cyclones secondaires est donc nécessairement élevé.

Ainsi, la séparation rapide peut s'effectuer en utilisant des cyclones directement connectés au réacteur ascendant, communément nommé riser par les hommes de métier, tel que décrit dans le brevet US5055177. Dans ces systèmes, les cyclones connectés au riser sont maintenus à l'intérieur d'une enceinte de grande dimension qui englobe généralement également un deuxième étage de cyclones. Le gaz séparé au premier étage rentre dans le deuxième étage de cyclones pour subir un dépoussiérage plus poussé. Le catalyseur est lui dirigé dans la phase dense d'un lit fluidisé de stripage où de la vapeur est injectée à contre-courant du catalyseur pour désorber les hydrocarbures. Ces hydrocarbures sont ensuite évacués dans la phase diluée du réacteur et introduits dans le système de séparation au niveau du deuxième étage de cyclones. Le fait d'avoir deux étages de cyclones, l'un connecté au riser effectuant la séparation primaire, le second étant connecté généralement à la sortie gaz des cyclones du premier étage nécessite tout d'abord d'avoir un diamètre très important pour l'enceinte englobant les deux étages de cyclones. Cette enceinte n'est parcourue que par les gaz issus de la désorption dans le stripper, ou par les gaz entraînés par le catalyseur dans les sorties de solides (jambes de retour) du premier étage. Les gaz issus de la section de stripage sont donc systématiquement exposés à une dégradation thermique longue dans le stripper car si le cyclone primaire fonctionne correctement, une quantité assez faible d'hydrocarbures est entraînée dans la jambe de retour du cyclone primaire vers le strippeur. Le volume de ladite grande enceinte étant grand, et la quantité d'hydrocarbures et de vapeur de stripage assez faible, la vitesse superficielle du gaz dans la phase diluée du réacteur à l'extérieur des cyclones primaires n'excédera alors pas quelques centimètres par seconde et le temps d'évacuation des hydrocarbures strippés ou entraînés dans les jambes de retour avec le catalyseur sera nécessairement de l'ordre d'une à plusieurs minutes.

Un autre inconvénient de ce système de séparation est qu'il introduit localement dans le lit fluidisé de stripage les hydrocarbures entraînés ou adsorbés sur le catalyseur. Comme le lit fluidisé est un mauvais mélangeur radial mais un très bon mélangeur axial, il en résulte inévitablement une perte d'efficacité dans la zone de stripage. Il serait possible d'améliorer le stripage en introduisant des gaz de stripage directement dans la sortie des solides. Néanmoins, cela ne serait efficace que si le catalyseur coulait lentement dans la sortie du cyclone pour ne pas entraîner les gaz, ce qui n'est pas possible à réaliser si l'on souhaite garder un bon fonctionnement des cyclones primaires.

Il est également envisageable d'effectuer la mise en contact des hydrocarbures et du catalyseur dans un réacteur descendant comme décrit dans le brevet FR 2753453. Ce type de contact piston très rapide et homogène est généralement caractérisé par des temps de mise en contact plus courts que dans les dispositifs de type riser, ce qui peut permettre de travailler à des températures plus élevées et avec des circulations de catalyseur plus importantes et donc favoriser la formation de produits valorisables tels que les LPG et particulièrement les oléfines et l'essence. Ces conditions rendent, encore plus que dans le riser, nécessaire de séparer efficacement les hydrocarbures d'une grande partie du catalyseur rapidement dans un temps court et en bonne intégration avec la phase de stripage du catalyseur.

La séparation rapide peut également s'effectuer en une seule chambre à vorticité induite telle que décrite dans le brevet US 5584985. Cette technologie, couramment appelée en anglais « vortex separation system » présente l'avantage de combiner la séparation et le stripage simultanément.

Les solides sont collés à la paroi sous l'effet de la force centrifuge et coulent vers le bas de l'enceinte où ils sont mis en contact avec un gaz de stripage qui est évacué avec les hydrocarbures désorbés vers le haut de la chambre de séparation. Malheureusement, pour obtenir une bonne efficacité de séparation avec un tel système, il faut limiter la taille de la chambre afin que la force centrifuge s'exerçant sur les particules soit suffisamment élevée. Cela est incompatible avec une vitesse de remontée des gaz de stripage faible pour limiter le réentraînement de particules descendant après leur séparation. Le fait de combiner dans la même enceinte une séparation et un stripage ne permet donc pas d'effectuer correctement ces deux opérations. Soit on privilégie la séparation au détriment du stripage soit on privilégie le stripage au détriment de la séparation, ce qui n'est pas compatible avec une bonne désorption des hydrocarbures. De plus, et c'est un problème important de cette technologie, le catalyseur séparé s'écoule préférentiellement en paroi et n'est donc pas mis facilement en contact avec le gaz de stripage qui lui se répartit sur toute la section de passage de la chambre.

On voit bien à travers les deux exemples précédents qu'il est difficile d'effectuer dans une seule enceinte la séparation et le stripage, et que la séparation rapide à l'aide de séparateurs connus et performants, tels que les cyclones implique nécessairement une détérioration des performances du stripeur.

Un des objets de l'invention est de remédier aux inconvénients de l'art antérieur. On a donc cherché à développer une technologie permettant d'obtenir des efficacités de séparation suffisantes, c'est à dire supérieures à 75 %, combinée à un dispositif de désorption, l'ensemble présentant une compacité importante qui permet à tous les gaz circulant du réacteur ascendant ou descendant vers la colonne de fractionnement associée à la zone réactionnelle de séjourner moins de 3 s dans la zone de séparation et de stripage, de procurer un bon contact entre le catalyseur issu des chambres de séparation et le gaz de stripage, et d'évacuer rapidement les hydrocarbures désorbés grâce à une compacité optimisée de l'équipement.

Plus précisément, l'invention concerne un dispositif de séparation et de stripage d'un mélange gazeux et d'un flux de particules, comprenant une enveloppe (51) réactionnelle contenant une enceinte (50) de séparation des particules et du mélange et une enceinte de stripage des particules séparées située au-dessous de l'enceinte de séparation (50), ladite enceinte comportant une pluralité de chambres de séparation (2) et une pluralité de chambres de circulation (3) réparties axialement autour d'une extrémité d'un réacteur (1) central de forme allongée, et disposées en alternance autour du réacteur dans lequel circule le mélange gazeux et le flux de particules, chaque chambre de séparation (2) comportant en sa partie supérieure, une ouverture (20) d'entrée communiquant avec le réacteur et avec une zone d'enroulement en partie définie par une paroi externe de la chambre de séparation dans le cas d'un réacteur ascendant (riser) ou en partie par une déflecteur (21) à la base du réacteur dans le cas d'un réacteur descendant (droppeur), de façon à séparer, dans un plan sensiblement vertical, les particules du mélange gazeux, chaque chambre de séparation (2) comportant deux parois latérales sensiblement verticales (24) qui sont aussi les parois des chambres de circulation (3), au moins une des parois (24) verticales de chaque chambre (2) comportant une première ouverture (5) latérale de sortie en dessous de l'ouverture d'entrée dans le cas d'un riser ou au-dessus de l'ouverture (20) dans le cas du droppeur, faisant communiquer le mélange gazeux dans la chambre de circulation adjacente, chaque chambre de séparation comportant une paroi externe (21-121) et une paroi interne qui définissent avec les parois latérales une ouverture (6) (6a) pour une sortie sensiblement axiale des particules située en dessous de la première ouverture (5) de sortie du mélange gazeux, l'ouverture (6) (6a) de sortie de particules communiquant en dessous des chambres de séparation avec la chambre de stnpage (8,30) qui contient au moins un moyen de stripage (11) principal, l'enveloppe 51) comprenant en outre au moins un conduit (14) d'évacuation de la chambre de circulation d'un mélange contenant des effluents gazeux et une mineure partie de particules, et au moins un séparateur secondaire (16) pour séparer les particules des effluents gazeux connecté au conduit d'évacuation (14) comprenant une sortie (19) d'effluents gazeux et une sortie (17) de particules, ladite chambre de stripage communiquant avec ledit conduit (14) d'évacuation du mélange via au moins les chambres de circulation (3).

De manière détaillée dans le cas d'un réacteur ascendant, chaque chambre de séparation comporte en sa partie supérieure, une ouverture d'entrée communiquant avec la réacteur et avec une zone d'enroulement de façon à séparer par effet centrifuge les particules du mélange gazeux, la zone d'enroulement étant adaptée à la mise en rotation dans un plan vertical du mélange gazeux et des particules suivant un angle d'au plus 360 degrés, chaque chambre de séparation comportant deux parois latérales sensiblement verticales qui sont aussi les parois des chambres de circulation, au moins une des parois verticales de chaque chambre comportant une première ouverture latérale de sortie en dessous de l'ouverture d'entrée faisant communiquer le mélange gazeux dans la chambre de circulation adjacente.

Chaque chambre de séparation comporte une paroi externe définissant la zone d'enroulement et une paroi interne opposée à la paroi externe qui définissent avec les parois latérales, une seconde ouverture pour une sortie sensiblement axiale des particules située en dessous de la première ouverture de sortie du mélange gazeux, la seconde ouverture de sortie de particules communiquant en dessous des chambres de séparation avec la chambre de stripage.

Selon une variante, dans le cas d'un réacteur descendant, le réacteur comporte un déflecteur (21) du gaz et des particules à son extrêmité inférieure qui permet la déflection latérale de l'écoulement du réacteur vers les chambres de séparation et initie la mise en rotation dans un plan sensiblement vertical de l'écoulement permettant la séparation par effet centrifuge des particules du gaz.

Chaque chambre de séparation comporte, dans sa partie supérieure, une ouverture d'entrée (20) communiquant avec le réacteur et déterminée par ledit déflecteur (21) et le réacteur, une paroi externe (121) dont la partie supérieure coopère avec le déflecteur (21) pour former une zone d'enroulement du gaz et des particules, et une première ouverture (122) de sortie située sensiblement dans le prolongement du déflecteur et permettant le passage des particules séparées du gaz vers la partie inférieure de la chambre de séparation.

Chaque chambre de séparation (2) comporte en outre deux parois latérales sensiblement verticales (24) qui sont aussi les parois des chambres de circulation (3), au moins une des parois (24) de chaque chambre (2) comportant une deuxième ouverture de sortie (5) latérale située au-dessus du déflecteur (21) et au-dessus de la première ouverture (122) pour faire communiquer le gaz nettoyé d'une grande partie des particules dans la chambre de circulation adjacente.

Selon une caractéristique de l'invention, les parois communes aux chambres de séparation et aux chambres de circulation peuvent comprendre chacune une ouverture sensiblement de même section.

Il est avantageux que chaque chambre de séparation puisse comporter, au-dessous dans le cas du riser et au-dessus dans le cas du droppeur, de l'ouverture d'entrée du mélange gaz-particules quittant le réacteur, des moyens pour prévenir la recirculation du mélange gazeux, un déflecteur par exemple, raccordés au réacteur et aux parois verticales de la chambre de séparation. On diminue ainsi les pertes de charges entre le réacteur et la sortie des gaz. De préférence, ce déflecteur peut s'enrouler suivant un angle de 30 degrés au moins, et il peut épouser, dans un plan vertical, au moins en partie la forme de l'ouverture latérale des dites parois.

Le plus souvent, chaque paroi latérale peut comporter une ouverture latérale permettant aux gaz séparés de la majorité des particules de s'échapper via les chambres de circulation et le conduit d'évacuation vers le séparateur secondaire gaz-particules.

Selon une autre caractéristique du dispositif avec un riser, la zone d'enroulement des particules dans la partie supérieure de la chambre de séparation et le déflecteur empêchant la recirculation de l'écoulement peuvent être sensiblement coaxiaux.

La paroi interne de la chambre de séparation peut être au moins une partie de la paroi externe du réacteur.

Selon une autre caractéristique du dispositif avec un droppeur, le déflecteur de déflection latérale de l'écoulement et le déflecteur au-dessus de ce dernier empêchant la recirculation de l'écoulement peuvent être sensiblement coaxiaux.

L'ouverture de sortie des particules des chambres de séparation peut être sensiblement perpendiculaire à l'axe du réacteur.

Pour prévenir les effets dus aux contraintes thermiques qui sont différentes en raison des températures différentes entre le réacteur et la paroi externe du dispositif, il est avantageux selon une première variante que l'enceinte de séparation comprenant l'ensemble des chambres de séparation soit entourée d'une enveloppe distincte de la paroi externe des chambres de séparation. Il est préférable que l'espace annulaire entre cette enveloppe et la paroi externe des chambres de séparation soit minimum pour limiter les temps de séjour des gaz de stripage dans le dispositif. L'enveloppe externe est alors la paroi externe des chambres de circulation.

Selon une autre variante. l'enveloppe peut constituer la paroi externe des chambres de séparation et de circulation. Dans ce cas, des moyens de dilatation sont prévus, par exemple, sur le conduit d'évacuation du mélange vers les cyclones secondaires.

Des moyens de stripage complémentaires peuvent être disposés en dessous des ouvertures de sortie des particules des chambres de séparation. Les effluents de stripage obtenus sont alors tout de suite évacués vers le haut par les chambres de circulation et traités dans les séparateurs secondaires.

Une fois séparées, les particules tombent dans une chambre de stripage. Celle-ci peut être rattachée à la partie inférieure de l'enveloppe ou elle peut selon une variante, être contenue dans la partie inférieure d'une chambre principale, calorifugée, suffisamment grande pour contenir l'ensemble des séparateurs secondaires, l'enceinte de séparation et son enveloppe, la chambre de stripage et l'extrémité supérieure du réacteur. Dans ce cas, il peut être avantageux que la chambre communique avec le séparateur secondaire par au moins un orifice disposé en amont des séparateurs secondaires, par exemple sur le conduit d'évacuation du mélange gazeux et de particules en amont des dits séparateurs.

Selon une autre variante , la chambre de stripage peut être rattachée à la partie inférieure de l'enveloppe, formant ainsi un ensemble dans lequel les séparateurs cycloniques secondaires peuvent être externes à l'enveloppe.
Selon une autre variante, les séparateurs secondaires peuvent être internes à l'enveloppe.

Au moins un moyen de stripage principal par un gaz est habituellement disposé dans la chambre de stripage.

Il est avantageux de disposer dans la partie supérieure de la chambre de stripage des moyens pour uniformiser l'écoulement des particules provenant des chambres de séparation, par exemple en les plaçant sous les moyens de stripage complémentaires.

Les chambres de circulation dans leur partie inférieure sont ouvertes afin de permettre la remontée des gaz de stripage du catalyseur dans le lit fluidisé. Il peut être en effet avantageux que cette ouverture des chambres de circulation au-dessus du lit fluidisé soit située à la base d'une partie en forme de section de cône qui aura pour effet de limiter les possibilités de circulation des gaz provenant de l'ouverture de sortie latérale sous cette ouverture, dans la phase diluée située au-dessus de l'ouverture inférieure. Afin de limiter les entraînements de catalyseur du lit fluidisé entrant par l'ouverture inférieure vers le sommet des chambres de circulation et postérieurement vers les cyclones secondaires, il sera avantageux de disposer ces ouvertures à environ 1 à 10 m, préférentiellement 2 à 5 m au-dessus de la surface du lit fluidisé. Par ailleurs, pour simplifier la construction de l'équipement, la section conique des chambres de circulation pourra avoir préférentiellement la même inclinaison que la section conique des chambres de séparation.

Les solides séparés sortant par l'ouverture de la chambre de séparation ou par Couverture de la chambre de circulation sont ensuite introduits dans la zone principale de stripage de l'unité, constituée d'un lit fluidisé dont le niveau est préférentiellement compris entre l'ouverture des chambres de circulation et celle des chambres de séparation, généralement de 1 à 2 m au-dessus de l'ouverture de la chambre de séparation et d'au moins 2 m sous l'ouverture de la chambre de circulation. Cette zone de stripage est en général une zone de contactage en lit fluidisé où les solides, suivant un mouvement descendant subissent un contactage avec un gaz de stripage à contre-courant tel que la vapeur d'eau, l'azote ou l'ammoniac. Le flux massique moyen du catalyseur dans cette zone est en général d'environ 10 à 300 kg/s/m² et préférentiellement 30 à 150 kg/s/m². La vitesse moyenne de montée des gaz de stripage est généralement comprise entre 0,1 et 1 m/s.

La vitesse du gaz remontant à travers l'ouverture de la chambre de circulation vers le cyclone externe est habituellement comprise entre 0,2 et 10 m/s et de préférence entre 0,5 et 5 m/s. On confine de ce fait le gaz séparé venant de la chambre de séparation par l'orifice latéral dans le volume de la chambre de circulation.

L'invention concerne aussi l'utilisation du dispositif ci-dessus dans un procédé de craquage catalytique d'hydrocarbures.

L'invention sera mieux comprise au vu des figures suivantes illustrant schématiquement le dispositif. parmi lesquelles :
- la figure 1 représente une vue en perspective de l'enceinte de séparation et de stripage en sortie d'un réacteur ascendant.
- la figure 2 montre une coupe longitudinale au niveau des chambres de séparation des particules des effluents gazeux de craquage ainsi que la présence de séparateurs secondaires externes des particules et de l'ensemble des effluents de craquage et de stripage.
- la figure 3 illustre une vue en coupe de l'agencement en alternance des chambres de séparation et des chambres de circulation de l'ensemble des effluents de craquage et de stripage au niveau CC' de la figure 1.
- la figure 4 représente une coupe longitudinale de l'ensemble du dispositif comprenant une chambre principale contenant l'enceinte de séparation dans son enveloppe, les séparateurs secondaires internes et la chambre de stripage.
- la figure 5 représente une coupe longitudinale au niveau des chambres de séparation des particules en sortie d'un réacteur descendant.
- la figure 6 montre une coupe longitudinale au niveau des chambres de circulation des gaz adjacentes aux dites chambres de séparation, qui sont connectées à des cyclones internes à l'enceinte de séparation et de stripage.
   Dans les figures, les mêmes références indiquent les mêmes moyens.

L'invention concerne un système de séparation et de stripage d'une phase solide poreuse finement divisée, qui peut être imprégnée de liquide, et d'une phase gazeuse en sortie d'un réacteur, dont la sortie est tubulaire et sensiblement verticale, pour la mise en contact entre une phase fluide essentiellement gazeuse et une phase solide. Elle est particulièrement destinée à la séparation des effluents en sortie des réacteurs de craquage catalytique, où les phases gazeuse et liquide comprennent des mélanges d'hydrocarbures et d'eau, et où le solide est un catalyseur, par exemple à base de silice-alumine, contenant en général au moins 15 % de zéolithes. L'invention permet à partir d'un mélange gaz-solide, le solide contenant éventuellement des fractions de liquide dans ses pores, d'obtenir d'une part une phase gaz-solide contenant moins de 25 % des solides et l'essentiel de la phase gazeuse introduits à l'entrée et d'autre part au moins 75 % des solides introduits à l'entrée, ces derniers subissant ensuite au moins une phase de contact avec un gaz judicieusement choisi (tel que la vapeur d'eau) afin de désorber au moins partiellement le mélange liquide vapeur contenu à l'intérieur des pores du solide.

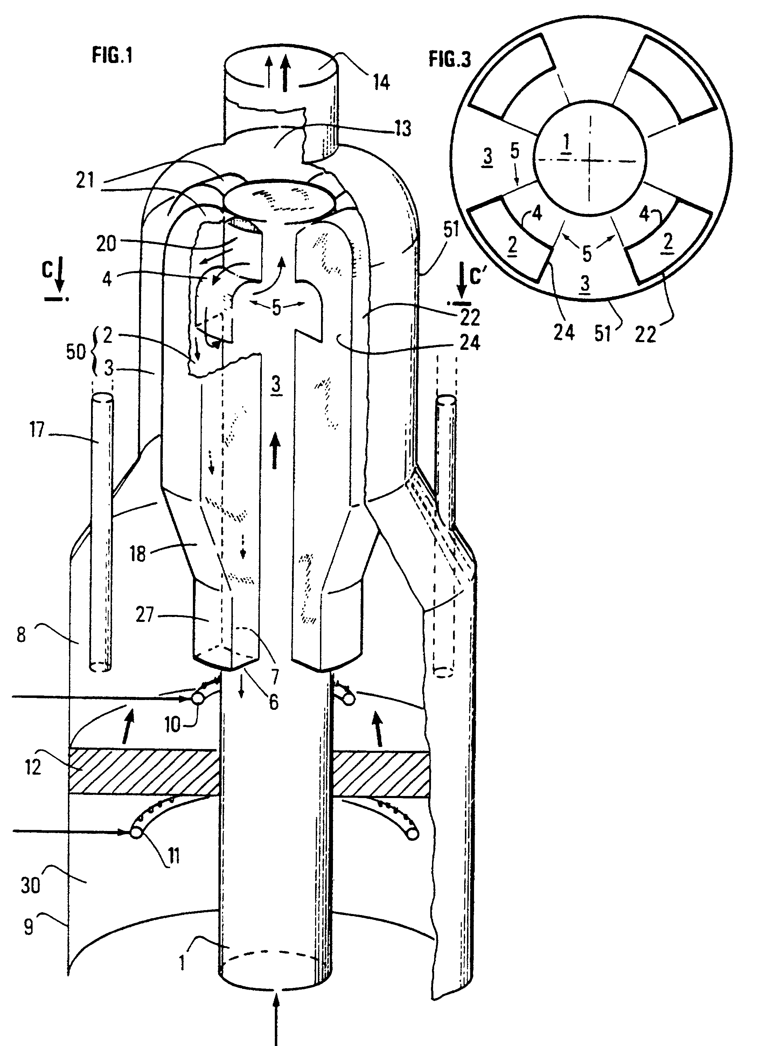

Ces performances sont obtenues grâce à un agencement compartimenté en alternance de chambres de séparation (2) et de chambres de circulation (3) réparties axialement autour d'un réacteur, ascendant par exemple et communiquant entre elles, comme il est montré sur les figures 1 à 4. L'équipement proposé est constitué de N chambres de séparation et de N chambres de circulation des effluents, N étant compris entre 2 et 10, préférentiellement compris entre 2 et 6. Une enveloppe (51) entoure une enceinte (50) de séparation qui comporte l'ensemble de ces chambres de séparation (2) et de circulation (3).

Chaque chambre de séparation (2) est connectée au réacteur (1) grâce à une ouverture (20) pratiquée dans la partie supérieure de la paroi de celui-ci. Les ouvertures (20) de chaque compartiment (2) offrent toutes la même section de passage. La partie supérieure de la chambre de séparation est destinée à provoquer une séparation des phases gazeuse et solide par un effet centrifuge et inertiel qui s'exerce sur le solide grâce à un changement de direction de l'écoulement lors du passage dans la partie supérieure de la chambre de séparation. L'invention concerne donc tout moyen mis en oeuvre pour provoquer dans un plan contenant l'axe du réacteur un changement de direction de l'écoulement, accompagné ou non d'un changement de section de passage pour la mise en forme de l'écoulement en sortie de réacteur. Un exemple de moyen mis en oeuvre est donné sur la figure 1. L'ouverture (20) débouche dans un compartiment réparti axialement autour de l'axe du réacteur dont la partie supérieure peut être constituée d'une paroi (21), sensiblement horizontale à sa jonction avec le réacteur, qui s'incurve ensuite vers le bas pour devenir sensiblement verticale (22). Il est également possible de substituer la partie incurvée par une transition angulaire nette, d'incliner la paroi (21) en connexion avec le réacteur vers le haut d'un angle de 10 à 90° avec la verticale afin d'obtenir par exemple une entrée tangente avec l'axe du riser, et d'incliner la paroi (22) de plus ou moins 70° par rapport à la verticale. Cette paroi (22) est distincte de l'enveloppe (51) et délimite un espace annulaire minimum.

Chaque chambre de séparation est munie de deux parois latérales (24) sensiblement verticales situées préférentiellement dans un plan contenant l'axe du réacteur (1), qui délimitent les chambres de séparation (2) des chambres de circulation (3). Dans chaque paroi (24), est disposée une ouverture (5) permettant l'évacuation de la phase gazeuse et de moins de 25 % du solide ayant pénétré dans chaque chambre de séparation par l'ouverture (20). Cette ouverture est préférentiellement de forme demi-circulaire, mais d'autres formes (rectangulaire, trapézoïdale) sont également envisageables. Le point le plus haut de l'ouverture (5) est en général situé sous le point le plus bas de l'ouverture (20). Le point le plus bas de l'ouverture (5) est situé au dessus d'une ouverture (6) servant à évacuer l'essentiel des solides et situé à la base de la chambre de séparation (2).

Pour prévenir la recirculation du mélange gazeux dans les chambres de séparation et donc afin d'obtenir une bonne efficacité de séparation, il est préférable d'isoler les sorties (5) de la zone d'entrée (20). On pourra donc utiliser avantageusement un déflecteur (4) comme décrit dans la demande de brevet FR 97/00327, ayant préférentiellement une symétrie axiale autour de l'axe du réacteur et épousant de préférence dans le plan vertical la forme de l'ouverture (5). La largeur de l'ouverture peut coïncider en tout point avec la largeur de la chambre de séparation. Ce déflecteur laissera avantageusement au mélange gaz solide sortant en (5) une section de passage égale à au moins 10 % de la section de passage offerte par une ouverture (5) et préférentiellement 50 %. Il peut s'enrouler suivant un angle de 30 degrés au moins, sensiblement coaxialement avec la zone d'enroulement.

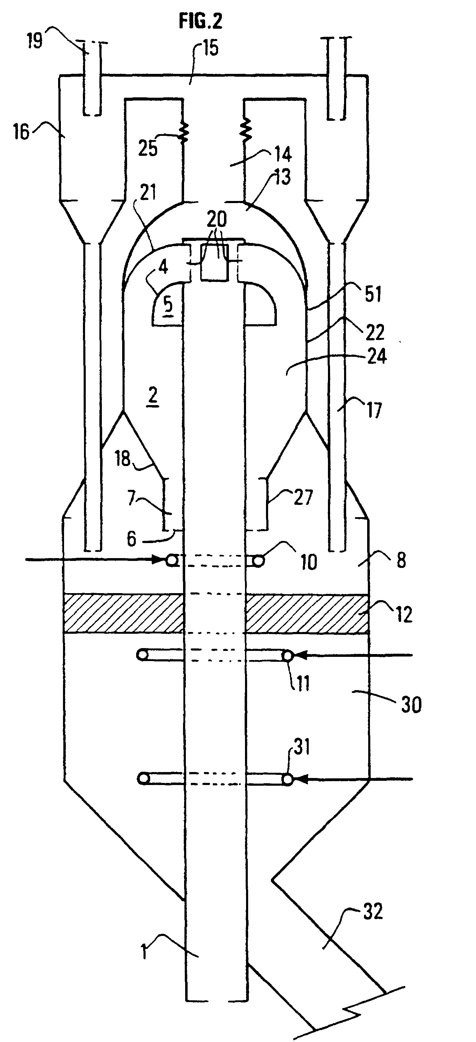

L'essentiel de la phase solide, pouvant entraîner une petite quantité de gaz entre ses grains et du gaz et du liquide adsorbés dans ses pores s'écoule sensiblement le long de la paroi (22) et sort de chaque chambre de séparation par une ouverture (6) située plus bas que l'ouverture (5) dans un plan sensiblement perpendiculaire à l'axe du réacteur, et perpendiculaire à l'ouverture (5). Afin de restreindre la quantité de gaz entraîné avec les solides dans l'ouverture (6), il est judicieux de limiter l'aire de passage de cette ouverture. Pour ce faire, on peut incliner directement la paroi (22) d'un angle rentrant vers le riser d'ouverture compris entre 5 et 45° par rapport à la verticale, préférentiellement compris entre 10 et 30°, ou prolonger la paroi (22) si elle est sensiblement verticale par une paroi inclinée d'un angle rentrant vers le riser d'ouverture compris entre 5 et 45° par rapport à la verticale, préférentiellement compris entre 10 et 30°, comme il est montré sur la figure 2 afin de créer une zone transitoire d'aspect conique (18) vers une zone (7) délimitée par le riser et une paroi (27) sensiblement verticale de section de passage limitée par rapport aux sections de passage rencontrées dans la partie supérieure de la chambre de séparation. Il est également possible de prolonger la paroi (22) verticalement jusqu'au bas de la chambre (2) et d'insérer un bloc plein de matériau, par exemple du réfractaire autour du réacteur dans la zone de sortie afin de créer une restriction d'écoulement dans la zone (7) par rapport à la zone (2) tout en maintenant les parois (22) et (27) parfaitement alignées.

Les chambres de circulation (3) sont munies d'une paroi externe qui est une partie de l'enveloppe et de deux parois latérales (24) sensiblement verticales situées préférentiellement dans un plan contenant l'axe du réacteur (1), qui délimitent les chambres de séparation des chambres de circulation. Dans chaque paroi (24), est disposée une ouverture (5) mettant en communication les chambres de séparation avec les chambres de circulation. II est préférable pour limiter les problèmes d'encombrement que la partie supérieure des chambres de circulation (3) possèdent sensiblement le même rayon par rapport à l'axe du réacteur que les chambres de séparation (2). Néanmoins, cette condition n'est pas indispensable au bon fonctionnement du dispositif. La partie inférieure de la zone de circulation (8) peut avoir un diamètre supérieur à la partie (3). Dans ce cas, elle contiendra toutes les parties basses des chambres de séparation (2) et sa paroi extérieure (9) s'étendra sur 360° autour de l'axe du réacteur (1).

Les chambres de circulation communiquent entre elles au-dessus du sommet des chambres de séparation (2) et leur géométrie dans cette zone se resserre afin de former un convergent (13) qui forme la sortie de l'équipement pour l'essentiel de la phase gazeuse et de moins de 25 % des solides.

Les chambres de circulation (3) communiquent également entre elles dans la partie inférieure, à des niveaux différents selon la géométrie de l'équipement :
- si le diamètre des chambres de circulation s'élargit (comme représenté sur la figure (1), elles communiquent entre elles au niveau des zones (8).
- si le diamètre des chambres de circulation reste constant, elles communiquent entre elles au niveau de la zone (8) si une zone de restriction de section de passage est appliquée dans la sortie (7) du séparateur, ou sous l'ouverture (6) si la sortie (7) des zones de séparation ne possède pas de restriction de passage.

Afin de bien répartir sur toute la section de passage des chambres de circulation réunies le catalyseur issu des sorties (7) des zones de séparation, des moyens (12) peuvent être répartis sur toute la section de passage pour uniformiser l'écoulement et limiter les zones de recirculation. Ces moyens seront par exemple des empilements de garnissages, tels que ceux utilisés dans les colonnes à distiller, des rangées de tubes entrecroisées les unes au dessus des autres, des plaques inclinées formant un enchevêtrement déterminé pour favoriser la migration radiale du solide. Sous ces garnissages comme sous la sortie (6) de la zone de séparation, on pourra disposer des moyens (10) d'introduction d'un gaz tel que l'azote ou la vapeur ou l'ammoniac favorisant la désorption des hydrocarbures liquides ou gazeux contenus à l'intérieur des pores des grains de catalyseur et leur évacuation immédiate par les chambres de circulation.

Les solides ayant subi un stripage sont ensuite introduits dans la zone principale (30) de stripage de l'unité qui est en général une zone de contactage en lit fluidisé où le solide, suivant un mouvement descendant subit au moins un contactage avec un gaz de stripage à contre-courant tel que la vapeur d'eau, l'azote ou l'ammoniac introduit par des anneaux (11).

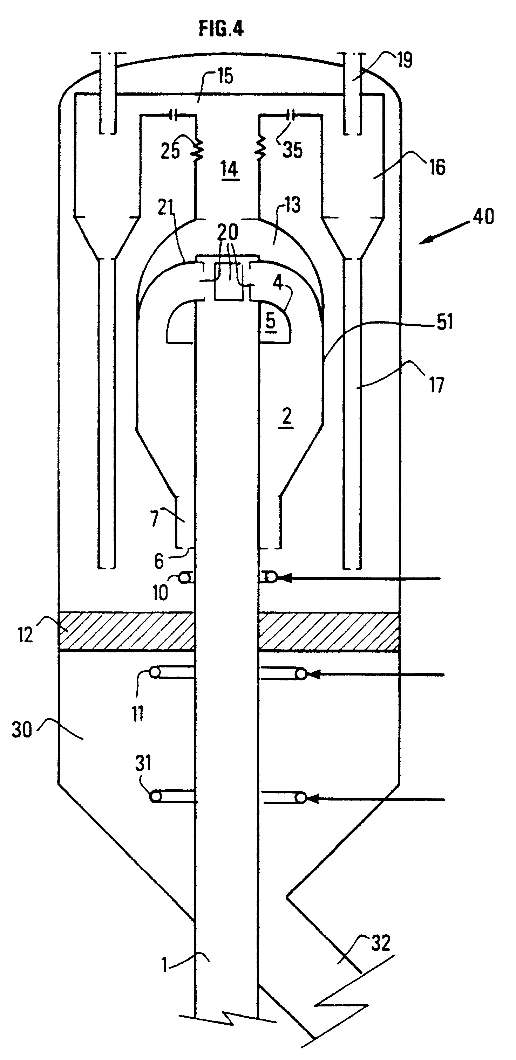

L'insertion du dispositif de l'invention spécifiquement dans la zone réactionnelle de l'unité de craquage catalytique et son fonctionnement sont décrits dans deux cas particulièrement applicables en fonction de la technologie adoptée pour le dimensionnement de ces unités sur les figures 2 et 4.

Sur la figure 2 qui est une variante de la figure 1, l'enveloppe (51) constitue la paroi externe des chambres de séparation (2) et bien entendu la paroi externe des chambres de circulation. Pour prévenir les contraintes thermiques, des moyens (25) de dilatation peuvent être disposés sur le conduit (14) d'évacuation des effiuents. Les effluents gaz-solide (le solide contenant dans ses pores une fraction de gaz et de liquide) pénètrent dans le dispositif selon l'invention seulement partiellement représentée sur la figure par l'ouverture (20) représentée sur la figure (1). Les solides et le gaz sont essentiellement séparés dans la partie supérieure des chambres de séparation (2) et le gaz accompagné de moins de 25 % du solide pénètre dans les chambres de circulation (3) par les ouvertures (5). Ce flux est ensuite évacué vers la partie supérieure des chambres de circulation (13) et vers le conduit (14) rassemblant tous les effluents de craquage et de stripage. Le conduit (14) est alors connecté par des conduits (15) latéralement ouverts sur les parois du conduit (14) et menant les effluents à l'entrée de séparateurs secondaires gaz-solide externes, tels que des cyclones (16), dont le nombre est généralement proche du nombre de chambres de séparation, afin de parachever la séparation des solides entraînés avec le gaz en aval des chambres de séparation et de stripage. Les gaz contenant généralement alors moins de 0,02 % en poids de particules solides sont évacués par la sortie (19) des cyclones et en général directement envoyés par des moyens classiques vers une colonne de fractionnement des différentes coupes d'hydrocarbures dans le cas du procédé de craquage catalytique. L'exemple qui vient d'être décrit montre que les N chambres de circulation sont reliées aux M cyclones (16) par un seul conduit (14) relié aux cyclones par M conduits (15). Dans le cas où M et N sont égaux, il peut être avantageux de relier directement chaque chambre de circulation à un séparateur par un conduit particulier. Les solides qui n'ont pas été entraînés par le gaz dans la chambre de séparation (2) sortent de celle-ci par l'ouverture (6) et peuvent subir éventuellement une première mise en contact avec un gaz de stripage introduit sous l'ouverture de sortie (6) par des moyens (10), être répartis sur toute la section de passage offerte par la chambre de stripage grâce aux moyens (12) d'uniformisation de l'écoulement puis subir une deuxième mise en contact avec un gaz de stripage introduit sous les moyens (12) par des moyens (11) tels que représentés sur les figures 1 et 2. Les solides sont mélangés avec les solides recyclés des cyclones (16) par les jambes de retour (17) préférentiellement au-dessus des moyens (12) d'homogénéisation radiale si ceux-ci sont utilisés dans le dimensionnement de l'équipement. Les solides peuvent ensuite s'écouler vers le bas dans une zone (30) contenant d'autres moyens d'introduction de gaz de stripage bien établis dans l'art antérieur et être évacués vers la zone de régénération du procédé de craquage catalytique par une sortie (32) dont la disposition peut par exemple être latérale à la zone (30) avec une inclinaison d'au moins 30° vers le bas par rapport à l'horizontale. Les gaz de stripage introduits par les différents moyens employés dans la zone (30) et par les moyens (10) éventuellement utilisés ainsi que les gaz et liquides désorbés des pores du catalyseur sont évacués vers les cyclones (16) à travers les chambres de circulation (3) où ils rejoignent les gaz séparés directement de la chambre de séparation et évacués à travers les ouvertures (5).

Selon la figure 3, la coupe transversale au niveau CC' de la figure 2 montre la présence de quatre chambres (2) de séparation et de quatre chambres (3) de circulation des effluents dont les parois internes et externes sont en partie coaxiales au réacteur (1) et à l'enveloppe (51) du dispositif. Les parois latérales communes (24) de ces chambres sont radiales et comprennent les ouvertures (5) qui font communiquer les effluents de craquage dans les chambres de circulation (3).

Selon la figure 4, les effluents gaz-solides, (le solide contenant dans ses pores une fraction de gaz et de liquide) pénètrent dans l'invention seulement partiellement représentée sur la figure par l'ouverture (20) représentée sur la figure (1). Les solides et le gaz sont essentiellement séparés dans la partie supérieure des chambres de séparation (2) et le gaz accompagné de moins de 25 % du solide pénètre dans les chambres de circulation par les ouvertures (5) (figures 1, 2). Ce flux est ensuite évacué vers la partie supérieure des chambres de circulation (13) et vers le conduit (14) rassemblant tous les effluents.

Le conduit (14) est alors connecté par des conduits (15) latéralement ouverts sur les parois du conduit (14) et menant les effluents à l'entrée de séparateurs secondaires gaz-solide classiques tels que des cyclones (16) internes contenus dans une enveloppe principale (40) et dont le nombre est généralement proche du nombre de chambres de séparation et de stripage, afin de parachever la séparation des solides entraînés avec le gaz en aval des chambres de séparation et de stripage. Les gaz contenant généralement alors moins de 0,02 % en poids de particules solides sont évacués par la sortie (19) des cyclones et en général directement envoyés par des moyens classiques vers une colonne de fractionnement des différentes coupes d'hydrocarbures dans le cas du procédé de craquage catalytique. L'exemple qui vient d'être décrit montre que les N chambres de stripage sont reliées aux M séparateurs (cyclones) par un seul conduit (14) relié aux cyclones par M conduits (15). Dans le cas où M et N sont égaux, il peut être avantageux de relier directement chaque chambre de circulation à un séparateur par un conduit particulier. Les solides qui n'ont pas été entraînés par le gaz dans la chambre de séparation (2) sortent de celle-ci par l'ouverture (6) et peuvent subir éventuellement une première mise en contact avec un gaz de stripage introduit sous l'ouverture (6) par les moyens (10) tels que représentés sur les figures 1 et 2, être répartis sur toute la section de passage offerte par la chambre de stripage ou les chambres de circulation réunies grâce aux moyens (12) puis subir une deuxième mise en contact avec un gaz de stripage introduit sous ces moyens (12) par les moyens (11) tels que représentés sur les figures 1 et 2. Les solides recyclés des cyclones (16) par les jambes de retour (17) sont mélangés aux solides à l'extérieur des chambres de circulation isolées par l'enveloppe (51) préférentiellement au-dessus d'une ouverture de l'enveloppe débouchant dans l'enceinte (40) principale contenant à la fois les cyclones, l'enceinte de séparation-circulation objet de l'invention et la chambre de stripage (30). Les solides peuvent ensuite s'écouler vers le bas dans la chambre (30) contenant d'autres moyens (31) d'introduction de gaz de stripage bien établis dans l'art antérieur et être évacués vers la zone de régénération du procédé de craquage catalytique par une sortie (32) dont la disposition peut par exemple être latérale à la chambre (30) avec une inclinaison d'au moins 30° vers le bas par rapport à l'horizontale. Les gaz de stripage introduits par les différents moyens employés dans la zone (30) sont essentiellement évacués vers les cyclones dans l'enceinte (40) à l'extérieur des chambres de séparation (2) et de circulation (3) et sont mélangés aux gaz séparés par le dispositif de séparation-stripage grâce à des ouvertures (35) aménagées dans les conduits (14) ou (15). Le gaz de stripage introduit par les moyens (10), (11) et (31) utilisés, ainsi que les gaz et liquides désorbés des pores du catalyseur, sont eux évacués vers les cyclones (16) à travers les chambres de circulation (3) où ils rejoignent les gaz séparés directement de la chambre de séparation à travers les ouvertures (5).

Il peut être avantageux que l'ensemble des gaz de stripage provenant de la zone (30) ainsi que ceux introduits par les moyens (10), (11) et (31) soient évacués vers les cyclones (16) à travers les chambres de circulation (3).
Dans ce cas, on supprimera toute ouverture (35) sur les conduits (14) et (15) reliant les cyclones (16) aux chambres de circulation et on disposera d'un balayage gazeux par un gaz inerte (tel que la vapeur d'eau) de l'enceinte (40) pour éviter la formation de coke liée à la présence d'hydrocarbures stagnants.

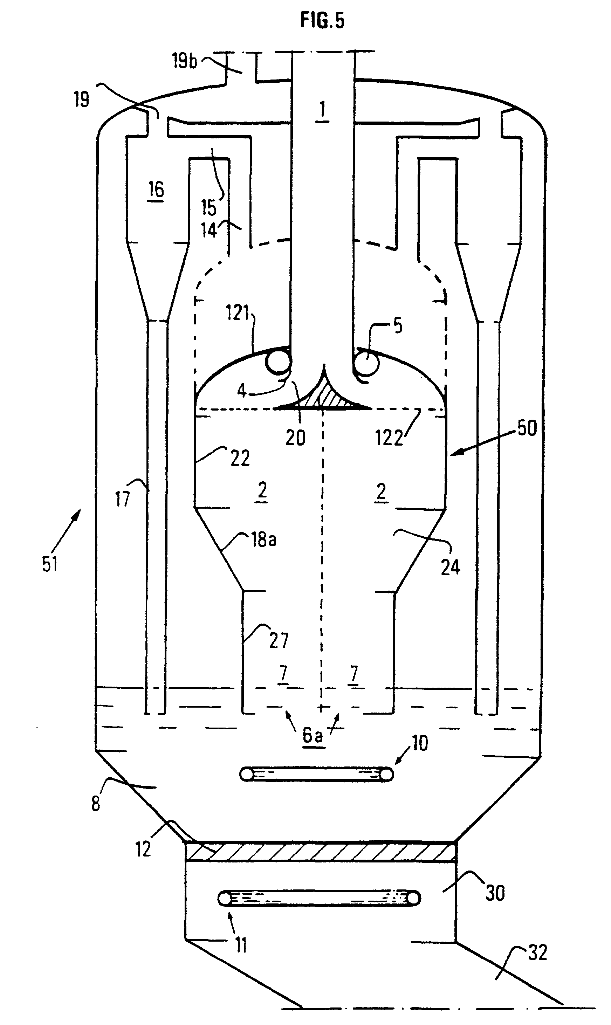

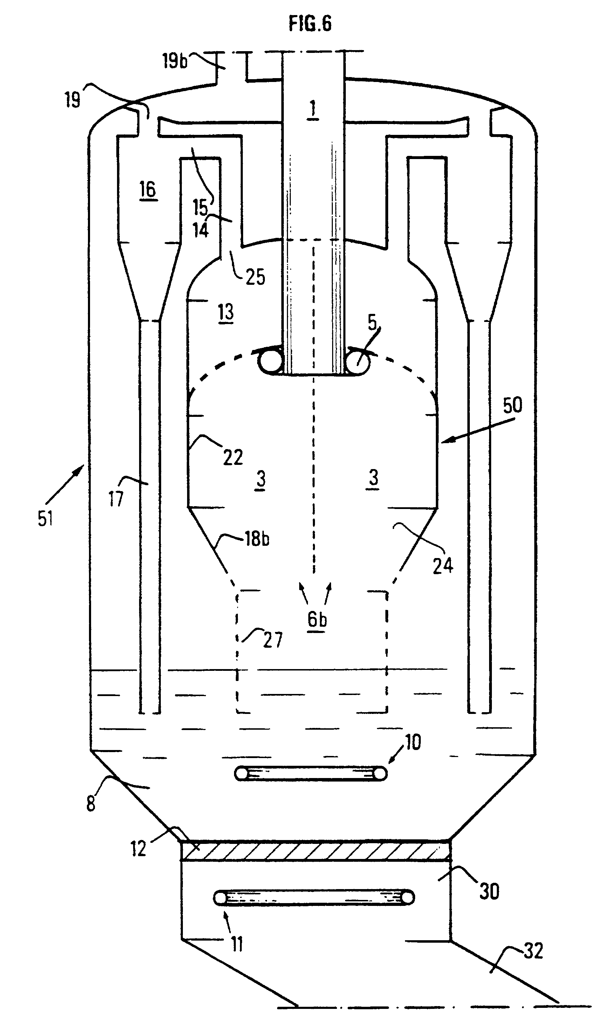

Les figures 5 et 6 illustrent le cas d'un dispositif de séparation et de stripage connecté à un réacteur dont au moins une partie côté sortie est un réacteur de craquage catalytique à circulation descendante de gaz et de particules.

La sortie est tubulaire et sensiblement verticale. L'invention est particulièrement destinée à la séparation des effluents en sortie des réacteurs de craquage catalytique, où les phases gazeuses et liquide sont constituées de mélanges d'hydrocarbures et d'eau, et où le solide est un catalyseur à base de silice-alumine, contenant en général au moins 15 % de zéolithes. L'invention permet à partir d'un mélange gaz-solide, le solide contenant éventuellement des fractions de liquides dans ses pores, d'obtenir d'une part une phase gaz-solide contenant moins de 25 % des solides et l'essentiel de la phase gazeuse introduits à l'entrée et d'autre part au moins 75 % des solides introduits à l'entrée, ces derniers ayant de plus subi une phase de contact avec un gaz judicieusement choisi (tel que la vapeur) afin de désorber au moins partiellement le mélange liquide vapeur contenu à l'intérieur des pores du solide.

Ces performances sont obtenues grâce à un agencement compartimenté de chambres de séparations et de chambres de circulation de gaz réparties axialement autour de la zone réactionnelle et communiquant entre elles, comme il est montré sur les figures 5 et 6. L'équipement proposé est constitué de N chambres de séparation et de N chambres de circulation, N étant compris entre 1 et 10, préférentiellement compris entre 2 et 6. Leur section est au moins en partie globalement triangulaire avec une paroi en arc de cercle. Une enveloppe (51) comprend les compartiments de séparation (2) et de circulation (3). Cette enveloppe est préférentiellement sensiblement axisymétrique autour d'un axe confondu avec l'axe du réacteur (1).

Chaque chambre de séparation (2) est connectée au réacteur (1) grâce à une ouverture (20) dans les parois de celui-ci. Les ouvertures (20) de chaque compartiment (2) offrent toutes la même section de passage. Un déflecteur (21) à paroi curviligne situé au bas du réacteur permet la déflection latérale de l'écoulement vers l'ouverture des chambres de séparation (20), et initie la mise en rotation de l'écoulement de gaz et de particules dans la partie supérieure des chambres de séparation, favorisant ainsi la ségrégation des phases dès l'entrée (20). Les chambres de séparation sont constituées d'au moins deux sorties, l'une (122) située dans le prolongement du déflecteur (21) dans un plan sensiblement perpendiculaire à l'axe du réacteur (1) permet l'évacuation des particules solides, les autres, situées au-dessus de l'entrée (20) qui permettent l'évacuation de la phase gazeuse contenant peu de particules par les ouvertures (5) vers les chambres de circulation adjacentes, situées dans les parois latérales des chambres de séparation qui sont aussi celles des chambres de circulation. Un déflecteur (4) destiné à canaliser l'écoulement et à favoriser la mise en rotation du gaz peut avantageusement être inséré dans le prolongement de l'entrée (20) de chaque chambre. Ce déflecteur se prolongera suivant les contours formés par les sorties gaz en formant un angle compris entre quelques degrés et 180° avec l'axe du réacteur, préférentiellement entre 45 et 90°.
La partie supérieure de la chambre de séparation est destinée à provoquer une séparation des phases gazeuses et solide par un effet centrifuge et inertiel qui s'exerce sur le solide grâce à un changement de direction de l'écoulement lors du passage dans la partie supérieure de la chambre de séparation. L'invention concerne donc tout moyen mis en oeuvre pour provoquer dans un plan contenant l'axe du réacteur un changement de direction de l'écoulement, accompagné ou non d'un changement de section de passage. Un exemple de moyen mis en oeuvre est donné sur la figure 5. L'ouverture (20) débouche dans un compartiment réparti axialement autour de l'axe du réacteur dont la partie supérieure est constituée d'un déflecteur connecté à l'extrémité inférieure du réacteur (1), permettant la mise en rotation de l'écoulement et formant une déflection curviligne de 90° depuis l'axe du réacteur jusqu'à la chambre de séparation. Il est également possible de substituer la partie du déflecteur (21) par une transition plus nette, en disposant par exemple simplement d'un fond plat au bas du réacteur sensiblement axisymétrique par rapport à l'axe du réacteur (1).

Chaque chambre de séparation est munie de deux parois latérales (24) sensiblement verticales situées préférentiellement dans un plan contenant l'axe du réacteur (1), qui délimitent les chambres de séparation (2) des chambres de circulation (3). Dans chaque paroi (24), est disposée une ouverture (5) permettant l'évacuation de la phase gazeuse et de moins de 25% du solide ayant pénétré dans chaque chambre de séparation par l'ouverture (20). Cette ouverture est préférentiellement de forme circulaire, mais d'autres formes (rectangulaire, trapézoïdale,...) sont également envisageables. Le point le plus haut de l'ouverture (5) est situé au-dessus du point le plus bas de l'ouverture (20). Le point le plus bas de l'ouverture (5) est situé au-dessus ou au niveau de l'ouverture (122) servant à évacuer l'essentiel des solides vers la base de la chambre de séparation (2) au-dessus d'une chambre de stripage (8,30).
Afin d'obtenir une bonne efficacité de séparation, il est préférable d'isoler les sorties (5) de la zone d'entrée (20). On pourra donc utiliser avantageusement un déflecteur (4) ayant préférentiellement une symétrie axiale autour de l'axe du réacteur et épousant dans le plan vertical sensiblement la forme de l'ouverture (5). Ce déflecteur (4) s'enroulera autour de la projection des sorties gaz (5) en formant un angle de quelques degrés à 180°, préférentiellement compris entre 45 et 90°. Ce déflecteur laissera au mélange gaz solide sortant par l'orifice (5) une section de passage égale à au moins 10 % de la section de passage offerte par l'ouverture (5) et préférentiellement au moins 50 %.
L'essentiel de la phase solide, pouvant entraîner une petite quantité de gaz entre ses grains et du gaz et du liquide adsorbés dans ses pores s'écoute sensiblement le long de la paroi (22) située sous l'ouverture (122) et sort de chaque chambre de séparation par l'ouverture (6a) située plus bas que l'ouverture (5) dans un plan sensiblement perpendiculaire à l'axe du réacteur, et perpendiculaire à l'ouverture (5). Afin de restreindre la quantité de gaz entraîné avec les solides dans l'ouverture (6a), il est judicieux de limiter l'aire de passage de cette ouverture. Pour ce faire, on peut incliner directement la paroi externe (22) d'un angle rentrant vers l'axe du réacteur, d'ouverture comprise entre quelques degrés et 45° par rapport à la verticale, préférentiellement comprise entre 10 et 30°, ou prolonger la paroi (22) si elle est sensiblement verticale par une paroi inclinée d'un angle rentrant vers le réacteur d'ouverture comprise entre quelques degrés et 45° par rapport à la verticale, préférentiellement comprise entre 10 et 30°, comme il est montré sur la figure 5, afin de créer une zone transitoire en forme de tronc de cône délimitée par la paroi (18a) vers une zone (7) délimitée par une paroi (27) sensiblement verticale de section de passage limitée par rapport aux sections de passage rencontrées dans la partie supérieure de la chambre de séparation, et les parois latérales (24) des chambres de séparation qui sous l'ouverture (122) convergent toutes en un segment coïncidant sensiblement à l'axe du réacteur (1). Il est également possible de prolonger la paroi (22) verticalement jusqu'au bas de la chambre (2) et d'insérer un bloc plein de matériaux, par exemple du réfractaire le long de la paroi (22) ou entre les parois latérales des chambres de séparation dans la zone de sortie afin de créer une restriction d'écoulement dans la zone (7) par rapport à la zone (2) tout en maintenant les parois (22) et (27) parfaitement alignées.
Ce moyen de restriction d'écoulement peut aussi être utilisé dans la partie inférieure des chambres de circulation lorsque toute la paroi externe est verticale.
Les chambres de circulation sont munies de deux parois latérales (24) sensiblement verticales situées préférentiellement dans un plan contenant l'axe du réacteur (1), qui délimitent les chambres de séparation des chambres de circulation. Dans chaque paroi (24), est disposée l'ouverture (5) mettant en communication les chambres de séparation avec les chambres de circulation. Il est préférable pour limiter les problèmes d'encombrement que la partie supérieure des chambres de circulation (3) possède le même rayon par rapport à l'axe du réacteur que les chambres de séparation (2). Néanmoins, cette condition n'est pas indispensable au bon fonctionnement du dispositif. La partie supérieure de la zone de stripage (8) peut avoir un diamètre supérieur à celui de la partie (3). Dans ce cas, elle contiendra toutes les parties basses des chambres de séparation (7) et sa paroi extérieure (30) s'étendra sur 360° autour de l'axe du réacteur (1).
Les chambres de circulation communiquent entre elles au-dessus du sommet des chambres de séparation (2) et leur géométrie dans cette zone se resserre afin de former un convergent (13) qui forme la sortie de l'équipement pour l'essentiel de la phase gazeuse et de moins de 25 % des solides.

Les chambres de circulation (3) dans leur partie inférieure sont préférentiellement ouvertes afin de permettre la remontée des gaz de stripage issus de l'enceinte (51) et provenant des moyens (10) mis en oeuvre pour stripper le catalyseur dans le lit fluidisé. Il peut être en effet avantageux que l'ouverture (6b) des compartiments de circulation au-dessus du lit fluidisé soit située à la base d'une partie en forme de section de cône (18b) qui aura pour effet de limiter les possibilités de circulation des gaz provenant de l'ouverture (5) sous cette ouverture dans la phase diluée située au-dessus de l'ouverture. Afin de limiter les entraînements de catalyseur du lit fluidisé entrant par l'ouverture (6b) vers le sommet des chambres de circulation et postérieurement vers les cyclones secondaires (16), il sera avantageux de disposer ces ouvertures à environ 1 à 10 m, préférentiellement 2 à 5 m au-dessus de la surface du lit fluidisé. Par ailleurs, pour simplifier la construction de l'équipement, la section conique 18b pourra avoir préférentiellement la même inclinaison que la section conique 18a des chambres de séparation.

Afin de bien répartir sur toute la section de passage du lit fluidisé dans laquelle plongeront préférentiellement les ouvertures (6a) des chambres de séparation, le catalyseur issu des sorties (7) des zones de séparation, des moyens (12) peuvent être répartis sur toute la section de passage du lit fluidisé pour uniformiser l'écoulement et limiter les zones de recirculation. Ces moyens seront par exemple des empilements de garnissages, tels que ceux utilisés dans les colonnes à distiller, des rangées de tubes entrecroisées les unes au-dessus des autres, des plaques inclinées formant un enchevêtrement déterminé pour favoriser la migration radiale du solide. Sous ces moyens comme sous la sortie (6a) de la zone de séparation, on pourra éventuellement disposer de moyens (10,11) d'introduction d'un gaz tel que l'azote ou la vapeur ou l'ammoniac favorisant la désorption des hydrocarbures liquides ou gazeux contenus à l'intérieur des pores des grains de catalyseur.

Les solides séparés sortant par l'ouverture (6a) de la chambre de séparation ou par l'ouverture (6b) de la chambre de circulation sont ensuite introduits dans la zone principale de stripage de l'unité, constituée d'un lit fluidisé dont le niveau est préférentiellement compris entre l'ouverture (6b) et l'ouverture (6a), généralement de 1 à 2 m au-dessus de 6a et d'au moins 2 m sous (6b), qui est en général une zone de contactage en lit fluidisé où les solides, suivant un mouvement descendant subissent un contactage avec un gaz de stripage à contre-courant tel que la vapeur d'eau, l'azote ou l'ammoniac. Le flux massique moyen du catalyseur dans cette zone est en général d'environ 10 à 300 kg/s/m² et préférentiellement 30 à 150 kg/s/m². La vitesse moyenne de montée des gaz de stripage est généralement comprise entre 0,1 et 1 m/s.
La vitesse du gaz remontant à travers l'ouverture (6b) vers le cyclone externe (16) est habituellement comprise entre 0,2 et 10 m/s et de préférence entre 0.5 et 5 m/s. On confine de ce fait le gaz séparé venant de l'orifice 5 dans le volume de la chambre de circulation.

L'insertion de l'invention spécifiquement dans la zone réactionnelle de l'unité de craquage catalytique et son fonctionnement sont décrits dans deux cas particulièrement applicables en fonction de la technologie adoptée pour le dimensionnement de ces unités sur les figures 5 et 6.

Sur les figures 5 et 6, les effluents gaz-solide (le solide contenant dans ses pores une fraction de gaz et de liquide) pénètrent dans le dispositif de l'invention seulement partiellement représenté sur la figure par l'ouverture (20). Les solides et le gaz sont essentiellement séparés dans la partie supérieure des chambres de séparation (2) et le gaz accompagné de moins de 25 % du solide pénètre dans les chambres de circulation par les ouvertures (5). Ce flux est ensuite évacué vers la partie supérieure des chambres de circulation (13) et vers le conduit (14) rassemblant tous les effluents.
Le conduit (14) est alors connecté par des conduits (15) latéralement ouverts sur les parois de (14) et menant les effluents à l'entrée de séparateurs gaz-solide classiques tels que des cyclones (16), dont le nombre est généralement proche du nombre de chambres de séparation et de stripage, afin de parachever la séparation des solides entraînés avec le gaz en aval des chambres de séparation et de stripage. Les gaz contenant généralement alors moins de 0.02 % en poids de particules solides sont évacués par les sorties (19 et 19b) des cyclones et en général directement envoyés par des moyens vers une colonne de fractionnement des différentes coupes d'hydrocarbures dans le cas du procédé de craquage catalytique. L'exemple qui vient d'être décrit montre que les N chambres de circulation sont reliées aux M séparateurs (cyclones) par un seul conduit (14) relié aux cyclones par M conduits (15). Dans le cas où M et N sont égaux, il peut être avantageux de relier directement chaque chambre de circulation à un cyclone par un conduit particulier. Les solides qui n'ont pas été entraînés par le gaz dans la chambre de séparation (2) sortent de celle-ci par l'ouverture (6a) et peuvent subir éventuellement une première mise en contact avec un gaz de stripage introduit sous (6a) par des moyens (10) tels que représentés sur les figures 5 et 6, être répartis sur toute la section de passage offerte par les zones de stripage réunies grâce à des moyens (12) puis subir une deuxième mise en contact avec un gaz de stripage introduit sous (12) par des moyens (11) appropriés. Les solides sont mélangés avec les solides recyclés des cyclones (16) par les jambes de retour (17) dans l'enceinte de stripage (8), préférentiellement au-dessus des moyens (12) d'homogénéisation radiale si ceux-ci sont utilisés dans le dimensionnement de l'équipement. Les solides peuvent ensuite s'écouler vers le bas dans une zone (30) contenant d'autres moyens d'introduction de gaz de stripage, ce qui est bien décrit dans l'art antérieur et être évacués vers la zone de régénération du procédé de craquage catalytique par une sortie (32) dont la disposition peut par exemple être latérale à la zone (30) avec une inclinaison d'au moins 30° vers le bas par rapport à l'horizontale. Les gaz de stripage introduits par les différents moyens employés dans la zone (30) et par les moyens (10) et (11) éventuellement utilisés ainsi que les gaz et liquides désorbés des pores du catalyseur sont évacués vers les cyclones (16) à travers les chambres de circulation (3) où ils rejoignent les gaz séparés directement de la chambre de séparation à travers les ouvertures (5).

Selon la disposition envisagée ici, les parois (51) de l'enceinte contenant le dispositif objet de l'invention et les enveloppes externes (22), (18a) et (18b) sont distinctes. Les dispositifs de séparation secondaires sont situés dans l'espace situé entre ces deux enceintes.

Selon une variante non représentée. le dispositif peu différer essentiellement du précédent par le fait que l'enveloppe (22) et l'enveloppe (51) sont confondues. Les dispositifs de séparation secondaires (16) sont situés dans l'espace externe situé à l'extérieur de ces deux enceintes.

## Revendications

1. Dispositif de séparation et de stripage d'un mélange gazeux et d'un flux de particules, comprenant une enveloppe (51) réactionnelle contenant une enceinte (50) de séparation des particules et du mélange et une enceinte de stripage des particules séparées située au-dessous de l'enceinte de séparation (50), ladite enceinte comportant une pluralité de chambres de séparation (2) et une pluralité de chambres de circulation (3) réparties axialement autour d'une extrémité d'un réacteur (1) central de forme allongée, et disposées en altemance autour du réacteur dans lequel circule le mélange gazeux et le flux de particules, chaque chambre de séparation (2) comportant en sa partie supérieure, une ouverture (20) d'entrée communiquant avec le réacteur et avec une zone d'enroulement en partie définie par une paroi externe de la chambre de séparation dans le cas d'un réacteur ascendant (riser) ou en partie par une déflecteur (21) à la base du réacteur dans le cas d'un réacteur descendant (droppeur), de façon à séparer, dans un plan sensiblement vertical, les particules du mélange gazeux, chaque chambre de séparation (2) comportant deux parois latérales sensiblement verticales (24) qui sont aussi les parois des chambres de circulation (3), au moins une des parois (24) verticales de chaque chambre (2) comportant une première ouverture (5) latérale de sortie en dessous de l'ouverture d'entrée dans le cas d'un riser ou au-dessus de l'ouverture (20) dans le cas du droppeur, faisant communiquer le mélange gazeux dans la chambre de circulation adjacente, chaque chambre de séparation comportant une paroi externe (21-121) et une paroi interne qui définissent avec les parois latérales une ouverture (6) (6a) pour une sortie sensiblement axiale des particules située en dessous de la première ouverture (5) de sortie du mélange gazeux, l'ouverture (6) (6a) de sortie de particules communiquant en dessous des chambres de séparation avec la chambre de stripage (8,30) qui contient au moins un moyen de stripage (11) principal, l'enveloppe 51) comprenant en outre au moins un conduit (14) d'évacuation de la chambre de circulation d'un mélange contenant des effluents gazeux et une mineure partie de particules, et au moins un séparateur secondaire (16) pour séparer les particules des effluents gazeux connecté au conduit d'évacuation (14) comprenant une sortie (19) d'effluents gazeux et une sortie (17) de particules, ladite chambre de stripage communiquant avec ledit conduit (14) d'évacuation du mélange via au moins les chambres de circulation (3).

2. Dispositif selon la revendication 1, dans lequel le réacteur est ascendant (riser) et dans lequel chaque chambre de séparation comporte en sa partie supérieure une ouverture (20) d'entrée communiquant avec le réacteur et avec une zone d'enroulement (21) de façon à séparer par effet centrifuge les particules du mélange gazeux, la zone d'enroulement étant adaptée à la mise en rotation dans un plan vertical du mélange gazeux et des particules suivant un angle d'au plus 360 degrés, chaque chambre de séparation (2) comportant deux parois latérales sensiblement verticales (24) qui sont aussi les parois des chambres de circulation (3), au moins une des parois (24) verticales de chaque chambre (2) comportant une première ouverture (5) latérale de sortie en dessous de l'ouverture (20) d'entrée faisant communiquer le mélange gazeux dans la chambre de circulation adjacente, chaque chambre de séparation comportant une paroi externe (21-22) définissant la zone d'enroulement et une paroi interne opposée à la paroi externe qui définissent avec les parois latérales une seconde ouverture (6) pour une sortie sensiblement axiale des particules située en dessous de la première ouverture (5) de sortie du mélange gazeux, la seconde ouverture (6) de sortie de particules communiquant en dessous des chambres de séparation avec la chambre de stripage (30).

3. Dispositif selon la revendication 2, dans lequel chaque chambre (2) de séparation comporte au dessous de l'ouverture d'entrée des moyens (4) pour prévenir la recirculation des mélanges gazeux, raccordés au réacteur.

4. Dispositif selon la revendication 3, dans lequel les moyens pour prévenir la recirculation du mélange gazeux épousent dans un plan vertical, au moins dans leur partie supérieure, la forme de l'ouverture (5) latérale de la paroi (24).

5. Dispositif selon la revendication 1, dans lequel au moins la partie côté sortie du réacteur est descendante et dans lequel le réacteur comporte un déflecteur (21) du gaz et des particules à son extrêmité inférieure qui permet la déflection latérale de l'écoulement du réacteur vers les chambres de séparation et initie la mise en rotation dans un plan sensiblement vertical de l'écoulement permettant la séparation par effet centrifuge des particules du gaz, chaque chambre de séparation comportant, dans sa partie supérieure, une ouverture d'entrée (20) communiquant avec le réacteur et déterminée par ledit déflecteur (21) et le réacteur, une paroi externe (121) dont la partie supérieure coopère avec le déflecteur (21) pour former une zone d'enroulement du gaz et des particules, et une première ouverture (122) de sortie située sensiblement dans le prolongement du déflecteur et permettant le passage des particules séparées du gaz vers la partie inférieure de la chambre de séparation, chaque chambre de séparation (2) comportant en outre deux parois latérales sensiblement verticales (24) qui sont aussi les parois des chambres de circulation (3), au moins une des parois (24) de chaque chambre (2) comportant une deuxième ouverture de sortie (5) latérale située au-dessus du déflecteur (21) et au-dessus de la première ouverture (122) pour faire communiquer le gaz nettoyé d'une grande partie des particules dans la chambre de circulation adjacente.

6. Dispositif selon la revendication 5, dans lequel chaque chambre (2) de séparation comporte au-dessus de l'ouverture d'entrée des moyens (4) pour prévenir la recirculation des mélanges gazeux raccordés au réacteur.

7. Dispositif selon la revendication 6, dans lequel les moyens pour prévenir la recirculation du mélange gazeux épousent dans un plan vertical, au moins dans leur partie inférieure, la forme de l'ouverture (5) latérale de la paroi (24).

8. Dispositif selon l'une des revendications 1 à 7, dans lequel la paroi externe (22) est distincte de l'enveloppe (51) de l'enceinte et délimite avec ladite enveloppe un espace annulaire.

9. Dispositif selon l'une des revendications 1 à 8, dans lequel le séparateur secondaire est externe à l'enveloppe (51).

10. Dispositif selon l'une des revendications 1 à 9, dans lequel le séparateur secondaire est contenu dans l'enveloppe (51).

11. Dispositif selon la revendication 1 à 9, dans lequel la partie inférieure des chambres de séparation (2) et de circulation (3) comporte une partie en forme de tronc de cône (18a, 18b) évasé vers le haut.

12. Dispositif selon l'une des revendications 1 à 9, dans lequel les parois externes des chambres de séparation et de circulation sont verticales et dans lequel la partie inférieure des chambres de séparation et de circulation comportent un moyen de restriction d'écoulement.

13. Dispositif selon l'une des revendications 1 à 12 dans lequel les chambres de circulation comportent une ouverture inférieure (6b) à une hauteur de 1 à 10 m et de préférence 2 à 5 m au-dessus de la surface du lit fluidisé contenu dans l'enceinte de stripage.

14. Dispositif selon l'une des revendications 1 à 3, dans lequel l'ouverture des chambres de séparation plonge dans le lit fluidisé contenu dans la chambre de stripage (8).

## Patentansprüche

1. Vorrichtung zum Trennen und Strippen eines gasförmigen Gemisches und eines Partikelstroms, einen Reaktormantel (51) umfassend, der ein Gefäß (50) zum Trennen der Partikel und des Gemisches sowie ein Gefäß zum Strippen der abgetrennten Partikel enthält, das unterhalb des Trenngefäßes (50) angeordnet ist, wobei dieses Gefäß eine Vielzahl von Trennkammern (2) sowie eine Vielzahl von Zirkulationskammern (3) umfasst, welche axial um ein Ende eines zentralen Reaktors (1) länglicher Gestalt verteilt und abwechselnd um den Reaktor herum, in welchem das gasförmige Gemisch und der Partikelstrom zirkulieren, angeordnet sind, wobei jede Trennkammer (2) in ihrem oberen Teil über eine Eintrittsöffnung (20) verfügt, die mit dem Reaktor und mit einer Umwicklungszone in Verbindung steht, welche zum Teil durch eine äußere Wand der Trennkammer für den Fall eines aufsteigenden Reaktors (Riser) oder zum Teil durch einen Deflektor (21) an der Basis des Reaktors im Falle eines absteigenden Reaktors (Droppers) definiert ist, derart, dass in einer im wesentlichen vertikalen Ebene die Partikel vom Gasgemisch getrennt werden, jede Trennkammer (2) zwei seitliche im wesentlichen vertikale Wandungen (24) umfasst, bei denen es sich um die Wandungen der Zirkulationskammern (3) handelt und wenigstens eine der vertikalen Wandungen (24) jeder Kammer eine erste seitliche Austrittsöffnung unterhalb der Eintrittsöffnung für den Fall eines Risers oder oberhalb der Öffnung (20) im Falle eines Droppers umfasst, die die Verbindung zum Gasgemisch in der benachbarten Zirkulationskammer herstellen, wobei jede Trennkammer eine äußere Wand (21-121) und eine innere Wand umfasst, die mit den seitlichen Wänden eine Öffnung (6) (6a) für einen im wesentlichen axialen Austritt der Partikel bilden, wobei der Ausgang unterhalb der ersten Austrittsöffnung für das gasförmige Gemisch sich befindet, die Öffnung (6) (6a) für den Austritt der Partikel unterhalb der Trennkammern mit der Stripperkammer (8, 30) in Verbindung steht, die wenigstens ein Hauptstrippermittel (11) enthält, wobei der Mantel (51) im übrigen wenigstens eine Abzugsleitung für die Zirkulationskammer eines die gasförmigen Abströme und einen kleineren Teil von Partikeln enthaltenden Gemisches umfasst und wenigstens einen Sekundärseparator (16) zum Trennen der Partikel vom gasförmigen Abstrom, wobei dieser mit der Abzugsleitung (14) in Verbindung steht und einen Austritt (19) für die gasförmigen Abströme und einen Austritt (17) für die Partikel hat und wobei jede Stripperkammer mit der Leitung (14) zum Abzug des Gemisches über wenigstens die Zirkulationskammern (3) in Verbindung steht.

2. Vorrichtung nach Anspruch 1, bei der der Reaktor von aufsteigender Bauart (Riser) ist und bei der jede Trennkammer in ihrem oberen Teil eine Eintrittsöffnung (20) umfasst, die in Verbindung mit dem Reaktor und mit einer Umwicklungszone (21) steht, derart, dass durch Zentrifugaleffekt die Partikel des gasförmigen Gemisches abgetrennt werden und die Umwicklungszone für die Rotation in einer vertikalen Ebene des gasförmigen Gemisches und der Partikel entsprechend einem Winkel von höchstens 63° ausgelegt ist, jede Trennkammer (2) zwei seitliche im wesentlichen vertikale Wandungen (24) umfasst, bei denen es sich ebenfalls um die Wandungen der Zirkulationskammern (3) handelt, wobei wenigstens eine der vertikalen Wandungen (24) jeder Kammer (2) eine erste seitliche Austrittsöffnung unterhalb der Eintrittsöffnung (20) umfasst, die die Verbindung zum gasförmigen Gemisch in der benachbarten Zirkulationskammer herstellt, jede Trennkammer eine äußere Wandung (21-22) umfasst, welche die Umwicklungszone sowie eine innere der äußeren Wand gegenüberstehende Wand definiert, welche mit den seitlichen Wandungen eine zweite Öffnung (6) für einen im wesentlichen axialen Austritt der Partikel definieren, der unterhalb der ersten Öffnung (5) für den Austritt des gasförmigen Gemisches angeordnet ist, wobei die zweite Öffnung (6) für den Auslass der Partikel unterhalb der Trennkammern mit der Stripperkammer (30) in Verbindung steht.

3. Vorrichtung nach Anspruch 2, bei der jede Trennkammer (2) unterhalb der Eintrittsöffnung Mittel (4) umfasst, um der Rezirkulation der gasförmigen Gemische zu begegnen, und zwar verbunden mit dem Reaktor.

4. Vorrichtung nach Anspruch 3, bei der die Mittel, um der Rezirkulation des gasförmigen Gemisches zu begegnen, in einer Vertikalebene wenigstens im oberen Teil die Form der seitlichen Öffnung (5) der Wandung (24) einnehmen.

5. Vorrichtung nach Anspruch 1, bei der wenigstens der austrittsseitige Teil des Reaktors von absteigender Bauart ist und bei der der Reaktor einen Deflektor (21) für das Gas und die Partikel am unteren Teil umfasst, der die seitliche Ablenkung der Strömung des Reaktors gegen die Trennkammern ermöglicht und das in Rotationsetzen in einer im wesentlichen vertikalen Ebene der Strömung initiiert, wodurch die Trennung durch Zentrifugaleffekt der Gaspartikel möglich wird, wobei jede Trennkammer in ihrem oberen Teil eine Eintrittsöffnung (20) umfasst, die mit dem Reaktor in Verbindung steht und durch diesen Deflektor (21) und den Reaktor bestimmt ist, wobei eine äußere Wand (121) vorgesehen ist, deren oberer Teil mit dem Deflektor (21) zusammenwirkt, um eine Umwicklungszone für das Gas und die Partikel zu bilden und eine erste Austrittsöffnung (122) im wesentlichen in der Verlängerung des Deflektors angeordnet ist und den Durchlass der vom Gas getrennten Partikel gegen den unteren Teil der Trennkammer zulässt, wobei jede Trennkammer (2) im übrigen zwei seitliche im wesentlichen vertikale Wandungen (24) umfasst, bei denen es sich auch um die Wandungen der Zirkulationskammern (3) handelt, wobei wenigstens eine der Wandengen (24) jeder Kammer (2) eine zweite seitliche Austrittsöffnung (5) umfasst, die oberhalb des Deflektors (21) und oberhalb der ersten Öffnung (122) angeordnet ist, um das gereinigte von einem großen Teil der Partikel gereinigte Gas in der benachbarten Zirkulationskammer in Verbindung zu setzen.

6. Vorrichtung nach Anspruch 5, bei der jede Trennkammer (2) oberhalb der Eintrittsöffnung Mittel (4) zur Begegnung der Rezirkulation der gasförmigen Gemische, verbunden mit dem Reaktor, umfasst.

7. Vorrichtung nach Anspruch 6, bei der die Mittel, um der Rezirkulation des Gasgemisches zu begegnen, in einer vertikalen Ebene, wenigstens in ihrem unteren Teil, die Form der seitlichen Öffnung (5) der Wand (24) annehmen.

8. Vorrichtung nach einem der Ansprüche 1 bis 7, bei der die äußere Wand (22) sich vom Mantel (51) des Gefässes unterscheidet und mit diesem Mantel einen Ringraum begrenzt.

9. Vorrichtung nach einem der Ansprüche 1 bis 8, bei der der Sekundärseparator sich außerhalb des Mantels (51) befindet.

10. Vorrichtung nach einem der Ansprüche 1 bis 9, bei der der Sekundärseparator in dem Mantel (51) enthalten ist.

11. Vorrichtung nach Anspruch 1 bis 9, bei dem der untere Teil der Trenn- (2) und Zirkulationskammern (3) einen Teil in Form eines Kegelstumpfs (18a, 18b), umfasst, der sich nach oben erweitert.

12. Vorrichtung nach einem der Ansprüche 1 bis 9, bei der die äußeren Wandungen der Trenn- und Zirkulationskammern vertikal sind und bei der der untere Teil der Trenn- und Zirkulationskammern ein die Strömung einschnürendes Mittel umfassen.

13. Vorrichtung nach einem der Ansprüche 1 bis 12, bei der die Zirkulationskammern eine untere Öffnung (6b) auf einer Höhe von 1 bis 10 m und bevorzugt 2 bis 5 m oberhalb der Oberfläche des Wirbelbettes, das im Strippergefäß enthalten ist, umfassen.

14. Vorrichtung nach einem der Ansprüche 1 bis 3, bei der die Öffnung der Trennkammern in das in der Stripperkammer (8) enthaltene Wirbelbett taucht.

## Claims

1. An apparatus for separating and stripping a gaseous mixture and a strearn of particles, comprising a reaction envelope (51) containing a vessel (50) for separating the particles from the mixture and a vessel for stripping the separated particles located below the separation vessel (50), said vessel comprising a plurality of separation chambers (2) and a plurality of circulation chambers (3) distributed axially about one extremity of a central reactor of elongate form (1), and disposed in alternating manner about the reactor in which the gaseous mixture and particle stream circulates, the upper portion of each separation chamber (2) comprising an inlet opening (20) communicating with the reactor and with a rollover zone defined in part by one outer wall of the separation chamber in the case of an upflow reactor (riser) or in part by a deflector (21) at the base of the reactor in the case of downflow reactor (dropper), so as to separate the particles from the gaseous mixture in a substantially vertical plane, each separation chamber (2) comprising two substantially vertical lateral walls (24) which are also the walls of the circulation chamber (3), at least one of the vertical walls (24) of each chamber (2) comprising a first lateral outlet opening (5) below the inlet opening in the case of a riser or above opening (20) in the case of a dropper, enabling the gaseous mixture to communicate with the adjacent circulation chamber, each separation chamber comprising an outer wall (21, 121) and an inner wall which with the lateral walls define an opening (6, 6a) for a substantially axial outlet for particles located below the first gaseous mixture outlet opening (5), particle outlet opening (6, 6a) communicating below the separation chambers with the stripping chamber (8, 30) which contains at least one principal stripping means (11), envelope (51) further comprising at least one conduit (14) for evacuating a mixture containing gaseous effluents and a minor portion of particles from the circulation chamber, and at least one secondary separator (16) for separating palticles of gaseous effluents connected to the evacuation conduit (14) comprising an outlet (19) for gaseous effluents and a particle outlet (17), said stripping chamber communicating with said mixture evacuation conduit (14) via at least the circulation chambers (3).

2. An apparatus according to claim 1, in which the reactor is a riser and in which the upper portion of each separation chamber comprises an inlet opening (20) communicating with the reactor and with a rollover zone (21) to separate the particles from the gaseous mixture by a centrifugal effect, the rollover zone being adapted to rotate the gaseous mixture and particles in a vertical plane through an angle of at most 360 degrees, each separation chamber (2) comprising two substantially vertical lateral walls (24) which are also the walls of the circulation chambers (3), at least one of the vertical walls (24) of each chamber (2) comprising a first lateral outlet opening (5) below the inlet opening (20) enabling the gaseous mixture to communicate with the adjacent circulation chamber, each separation chamber comprising an outer wall (21, 22) defining the rollover zone and an inner wall opposite the outer wall which with the lateral walls define a second opening (6) for a substantially axial outlet for particles, located below the first gaseous mixture outlet opening (5), the second pauticle outlet opening (6) communicating with the shipping chamber (30) below the separation chambers.

3. An apparatus according to claim 2, in which each separation chamber (2) comprises means (4) below the inlet opening for preventing re-circulation of gaseous mixtures, connected to the reactor.

4. An apparatus according to claim 3, in which at least the upper portion of the means for preventing re-circulation of the gaseous mixture follows the shape of the lateral opening (5) in wall (24) in the vertical plane.

5. An apparatus according to claim 1, in which at least the reactor outlet portion is a dropper and in which the reactor comprises a deflector (21) for gas and particles at its lower extremity to laterally deflect the flow from the reactor towards the separation chambers and initiate rotation of the flow in a substantially vertical plane to separate particles from the gas by a centrifugal effect, the upper portion of each separation chamber comprising an inlet opening (20) communicating with the reactor and defined by said deflector (21) and the reactor, an outer wall (121) the upper portion of which co-operates with the deflector (21) to form a gas and pazticle rollover zone, and a first outlet opening (122) located substantially in the extension of the deflector and enabling particles separated from the gas to pass to the lower portion of the separation chamber, each separation chamber (2) also comprising two substantially vertical lateral walls (24) which are also walls of the circulation chambers (3), at least one of walls (24) of each chamber (2) comprising a second lateral outlet opening (5) located above the deflector (21) and above the first opening (122) to enable gas cleaned of a large portion of the particles to communicate with the adjacent circulation chamber.

6. An apparatus according to claim 5, in which each separation chamber (2) comprises means (4) above the inlet opening for preventing re-circulation of gaseous mixtures, connected to the reactor.

7. An apparatus according to claim 6, in which at least the lower portion of the means for preventing re-circulation of the gaseous mixture follows the shape of the lateral opening (5) in wall (24) in the vertical plane.

8. An apparatus according to any one of claims 1 to 7, in which the outer wall (22) is distinct from the envelope (51) of the vessel and delimits an annular space with said envelope.

9. An apparatus according to any one of claims 1 to 8, in which the secondaly separator is external to the envelope (51).

10. An apparatus according to any one of claims 1 to 9, in which the secondary separator is contained in the envelope (51).

11. An apparatus according to any one of claims 1 to 9, in which the lower portion of the separation (2) and circulation (3) chambers comprise a portion in the form of a truncated cone (18a, 18b) opening towards the top.

12. An apparatus according to any one of claims 1 to 9, in which the outer walls of the separation and circulation chambers are vertical and in which the lower portion of the separation and circulation chambers comprise a flow restriction means.

13. An apparatus according to any one of claims 1 to 12, in which the circulation chambers comprise a lower opening (6b) at a height of 1 to 10 m, preferably 2 to 5 m, above the surface of the fluidised bed contained in the stripping vessel.

14. An apparatus according to any one of claims 1 to 3, in which the opening from the separation chambers dips into the fluidised bed contained in the stripping chamber (8).
